# EUROPÄISCHE PATENTSCHRIFT

(11) **EP 1 103 707 B1**
(45) Veröffentlichungstag und Bekanntmachung des Hinweises auf die Patenterteilung: **26.11.2003**
(21) Anmeldenummer: 00120717.4
(22) Anmeldetag: 22.09.2000
(51) Int. Cl.: F02D 13/02, F01L 1/26, F01L 13/00

(54) **Ventilsteuerung für eine Brennkraftmaschine**
Valve control for a combustion engine
Commande de soupapes pour moteur à combustion

(30) Priorität: 27.11.1999 DE 19957165
(43) Veröffentlichungstag der Anmeldung: 30.05.2001
(73) Patentinhaber: Dr.Ing. h.c.F. Porsche Aktiengesellschaft, 70435 Stuttgart (DE)
(72) Erfinder: Jonitz, Martin, 75443 Ötisheim (DE); Deeg, Hans-Peter, 71263 Weil der Stadt-Münklingen (DE); Hofstetter, Matthias, 77975 Ringsheim (DE)

(56) Entgegenhaltungen:
- EP-A- 0 843 080
- DE-A- 19 801 603
- DE-A- 19 853 062
- JP-A- 10 037 772
- US-A- 4 768 467
- US-A- 5 950 583

## Beschreibung

Die Erfindung betrifft eine Ventilsteuerung für eine Brennkraftmaschine nach dem Oberbegriff des Patentanspruchs 1.

Eine bekannte Ventilsteuerung einer Brennkraftmaschine, US 5,031,583, umfaßt eine Nockenwelle mit Nocken unterschiedlichen Profils, die ein Einlaßventil oder ein Auslaßventil betätigen. Zwischen den Nocken und den Ventilen sind Kipphebel vorgesehen, mit denen unter Vermittlung von Kupplungselementen der Hub des jeweiligen Ventils beeinflußbar ist. Darüber hinaus ist die Nockenwelle mit einem Phasenversteller versehen, mit dem die Steuerzeiten der Ventile veränderbar sind. Nachteilig bei dieser Ausführung ist, daß keine Vorkehrungen getroffen sind, um die Funktion der Kupplungselemente zu überwachen.

Sinngemäß gilt dies auch für als mit Ventilen zusammenwirkende Schalttassen ausgebildete Schaltelemente, DE 198 01 603 einer Ventilsteuerung, mit denen in Verbindung von unterschiedlichen Nocken einer Nockenwelle der Hub von Ventilen variierbar ist.

Aufgabe der Erfindung ist es, an einer Ventilsteuerung für eine Brennkraftmaschine solche Vorkehrungen zu treffen, daß der Schaltzustand der Schaltelemente erfaßbar ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Ermittlung der Schaltzeit der Schaltelemente durch die Drehschwingungen der Nockenwelle zur Abstimmung von hydraulischen Systemen für die Ansteuerung der besagten Schaltelemente einsetzbar ist. Darüber hinaus besteht die Möglichkeit ein aus der Schaltzeit gewonnenes Funktionssignal zur Beeinflussung einer Drosselklappe, einer Einspritzanlage (Einspritzzeit, Einspritzmenge) oder einer Zündanlage (Zündzeitpunkt) zu verwenden. Das Niveau der Drehschwingungen der Nockenwelle ändert sich beim Umschalten der Schaltelemente - vom maximalen Hub zum reduzierten Hub und vice versa - über die Ventilfederkraftdifferenz. Dabei ist es möglich, durch eine Grenzwertsetzung des Drehschwingungssignals über die zeitliche Differenz von Ansteuersignal zu Grenzwertüberschreitung die Schaltzeit zu messen.

In der Zeichnung wird ein Ausführungsbeispiel der Erfindung gezeigt, das nachstehend näher beschrieben wird.

Es zeigen
- Fig. 1: eine schematisch dargestellte Brennkraftmaschine mit der erfindungsgemäßen Ventilsteuerung,
- Fig.2: eine Teilansicht der Ventilsteuerung mit Schaltelementen und einem Nockenwellenversteller,
- Fig.3: ein Diagramm, das die Erzeugung des erfindungsgemäßen Funktionssignals verdeutlicht,
- Fig. 4: ein Diagramm, das Drehschwingungen einer Nockenwelle wiedergibt.

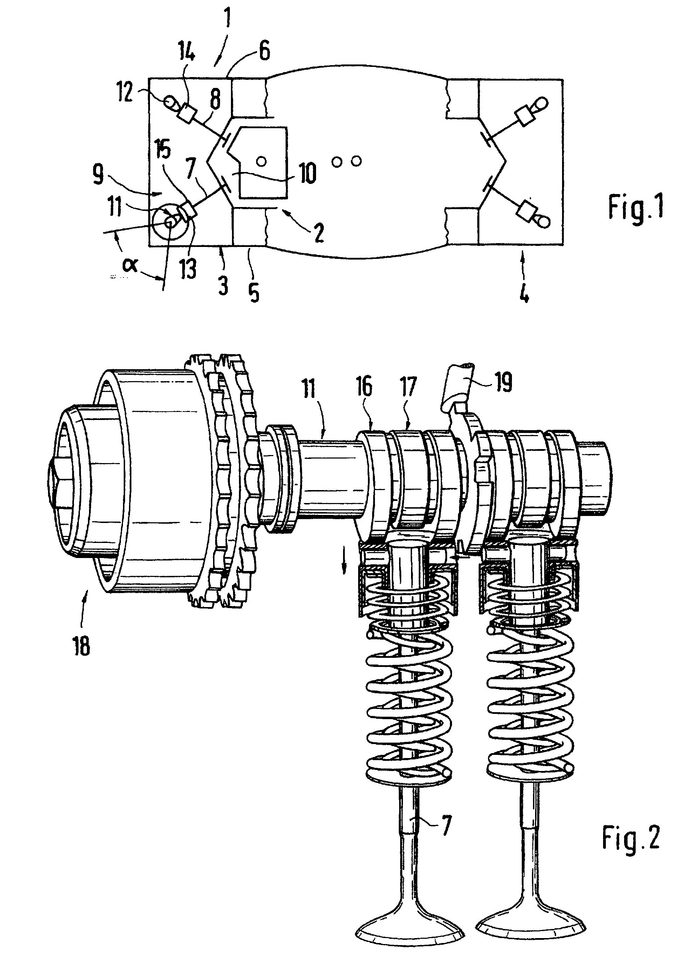

Eine Brennkraftmaschine 1 umfaßt mehrere Zylinder 2 und gegenüberliegende Zylinderreihen 3 und 4, in denen besagte Zylinder vorgesehen sind. Jede Zylinderreihe 3 weist ein Zylindergehäuse 5 und einen Zylinderkopf 6 auf. Der Zylinderkopf 6 ist pro Zylinder 2 mit wenigstem einem Einlaßventil 7 und einem Auslaßventil 8 versehen, die Bestandteil einer Ventilsteuerung 9 sind und zum Gaswechsel in einem Brennraum 10 des jeweiligen Zylinders dienen. Die Betätigung der Einlaßventile 7 und der Auslaßventile 8 einer Zylinderreihe z.B. 3 wird vermittels einer Einlaßnockenwelle 11 und einer Auslaßnockenwelle 12 bewerkstelligt, wobei zwischen den Nockenwellen 11 und 12 sowie den Ventilen 7, 8 Tassenstößel 13,14 angeordnet sind. Zumindest die Tassenstößel 13, die mit den Einlaßventilen 7 zusammenarbeiten, sind als Schaltelemente 15 ausgeführt, mit denen der Hub der Einlaßventile 7 variierbar bzw. umschaltbar ist. Hierzu sind je Einlaßventil 7 an der Einlaßnockenwelle 11 unterschiedliche Nocken 16,17 angebracht-Fig. 2 -. Dabei bewirkt Nocken 16 einen maximalen Hub des Einlaßventils 7; Nocken 17 einen reduzierten Hub. Darüber hinaus ist die Einlaßnockenwelle 11 mit einem Nockenwellenversteller 18 versehen, mit dem ihre relative Drehlage im Winkel α zur Auslaßnockenwelle 12 veränderbar ist. Damit können die Steuerzeiten der Einlaßventile 7 und der Auslaßventile 8 beeinflußt werden.

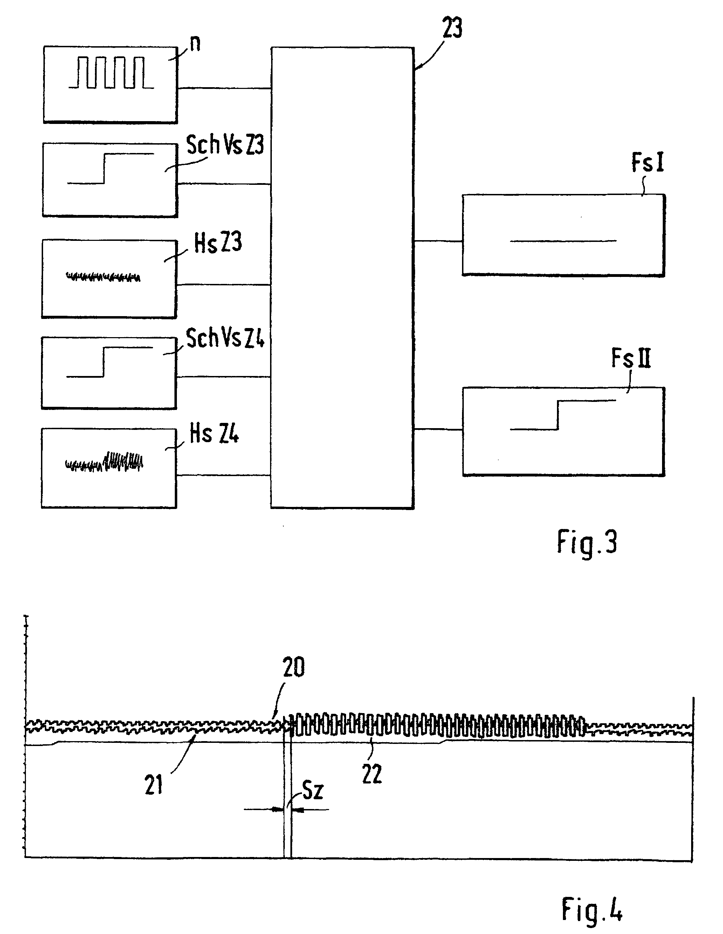

Die Drehlagenänderung der Einlaßnockenwelle 11 und die Hubumschaltung der Schaltelemente 15, die mit einem nicht näher gezeigten hydraulischen System zusammenwirken, erfolgt z.B. in Abhängigkeit der Drehzahl und der Last - Gaspedalstellung - der Brennkraftmaschine 1. Zur Ermittlung der Schaltzeit Sz - Fig.4 - der Schaltelemente 15 - maximaler Hub und reduzierte Hub - werden Drehschwingungen an der Einlaßnockenwelle 11 mittels eines an sich vorhandenen Hallgebers 19 abgenommen. Diese Drehschwingungen ändern sich in Abhängigkeit der Hubumschaltung der Schaltelemente 15, was in dem Diagramm gemäß Fig. 4 dargestellt ist. Eine Schwingungslinie 20 umfaßt zwei Linienabschnitte 21 und 22. Der Linienabschnitt 21 verdeutlicht den Schwingungsverlauf bei reduziertem Hub; der Linienabschnitt 22 den Schwingungsverlauf bei maximalem Hub. Die Schaltzeit Sz wird über die zeitliche Differenz von Ansteuersignal zu Grenzwertüberschreitung gemessen.

In Fig. 3 wird eine Ausführung zur Erzeugung von Funktionssignalen FsI und FsII veranschaulicht. Danach werden einer Auswerteelektronik 23 die Drehzahl n der Brennkraftmaschine 1, Schaltzustand SchzVsZ3 der Ventilhubschaltung der Zylinderreihe 3, Hallgebersignal HsZ3 der Zylinderreihe 3, Schaltzustand SchVsZ4 der Ventilhubschaltung der Zylinderreihe 4 und Hallgebersignal HsZ4 der Zylinderreihe 4 zugeführt. Diese Daten werden in der Auswerteelektronik 23 verarbeitet und bilden letztlich die Funktionssignale Fsl und Fsll der Schaltelemente 15 der Zylinderreihe 3 und 4.

## Patentansprüche

1. Ventilsteuerung für Brennkraftmaschinen mit mehreren Zylindern, bei der eine Nockenwelle Ventile zur Gaswechselsteuerung in einem Brennraum betätigt, wobei ein oder mehrere Ventile unter Vermittlung von Schaltelementen mittels der Nockenwelle bezüglich Hub schaltbar sind, **dadurch gekennzeichnet, daß** die Schaltzeit (Sz) der Schaltelemente (15) in Abhängigkeit der Drehzahl (n) der Brennkraftmaschine (1 ) und von Drehschwingungen der Nockenwelle (Einlaßnockenwelle 11) detektiert und zu einem Funktionssignal (Fsl; Fsll) verarbeitet wird.

2. Ventilsteuerung nach Anspruch 1, **dadurch gekennzeichnet, daß** das Funktionssignal (Fsl; Fsll) mittels einer Auswerteelektronik (19) vorzugsweise unter Berücksichtigung der Drehzahl (n) der Brennkraftmaschine (1), eines Schaltzustandes (SchzVsZ3; SchzVsZ4) einer Ventilhubschaltung und eines Hallgebersignals (HsZ3; HsZ4) erfosst wird.

3. Ventilsteuerung nach Anspruch 1, **dadurch gekennzeichnet, daß** das Funktionssignal (Fsl; Fsll) zur Beeinflussung eines hydraulischen Systems für die Schaltelement (15) herangezogen wird.

4. Ventilsteuerung nach Anspruch 1, **dadurch gekennzeichnet, daß** das Funktionssignal (Fsl; Fsll) zur Beeinflussung von Einrichtungen der Brennkraftmaschine (1), wie z.B. Drosselklappe, Einspritzpumpe oder Zündversteller herangezogen wird.

5. Ventilsteuerung nach einem oder mehreren der vorangehenden Ansprüche, **dadurch gekennzeichnet, daß** die Drehschwingungen von einem vorzugsweise der Nockenwelle (Einlaßnockenwelle 11 ) zugeordneten Hallgeber (16), Induktionsgeber oder optischen Geber erzeugt werden.

## Claims

1. A valve control for internal-combustion engines with a plurality of cylinders, in which a camshaft actuates valves for gas-exchange control in a combustion chamber, wherein one or more valves can be shifted with respect to the stroke by means of the camshaft by way of shifting members, **characterized in that** the shifting time (**Sz**) of the shifting members (15) is detected in a manner dependent upon the rotational speed (**n**) of the intemal-combustion engine (1) and upon torsional vibrations of the camshaft (intake camshaft 11) and are processed to form a functional signal (**FsI; FsII**).

2. A valve control according to Claim 1, **characterized in that** the functional signal (**FsI; FsII**) is detected by means of an evaluating electronic device (19) preferably whilst taking into consideration the rotational speed (**n**) of the internal-combustion engine (1), a shifting state (**SchzVsZ3; SchzVsZ4**) of a valve-stroke switch and a Hall-generator signal (**HsZ3; HsZ4**).

3. A valve control according to Claim 1, **characterized in that** the functional signal (**FsI; FsII**) is used in order to influence an hydraulic system for the shifting members (15).

4. A valve control according to Claim 1, **characterized in that** the functional signal (**FsI; FsII**) is used in order to influence devices of the internal-combustion engine (1), such as for example a throttle valve, an injection pump or an ignition-timing device.

5. A valve control according to one or more of the preceding Claims, **characterized in that** the torsional vibrations are produced by a Hall pulse generator (16), induction-type pulse generator or optical pulse generator preferably associated with the camshaft (intake camshaft 11).

## Revendications

1. Commande de soupapes pour des moteurs à combustion multicylindres, pour laquelle un arbre à cames actionne des soupapes pour la commande du renouvellement du gaz dans une chambre de combustion, une ou plusieurs soupapes pouvant être commutées du point de vue de la course au moyen de l'arbre à cames par l'intermédiaire d'éléments de commutation, **caractérisée en ce que** le temps de commutation (Sz) des éléments de commutation (15) est détecté en fonction du régime (n) du moteur à combustion (1) et de vibrations en torsion de l'arbre à cames (arbre à cames d'admission 11) et est traité pour donner un signal de fonction (FsI ; FsII).

2. Commande de soupapes selon la revendication 1, **caractérisée en ce que** le signal de fonction (FsI ; FsII) est saisi au moyen d'un bloc électronique de dépouillement (19), de préférence compte tenu du régime (n) du moteur à combustion (1), d'un état de commutation (SchzVsZ3 ; SchzVsZ4) d'une commutation de course de la soupape et d'un signal de transmetteur Hall (HsZ3 ; HsZ4).

3. Commande de soupapes selon la revendication 1, **caractérisée en ce que** le signal de fonction (FsI ; FsII) est utilisé pour influencer un système hydraulique pour les éléments de commutation (15).

4. Commande de soupapes selon la revendication 1, **caractérisée en ce que** le signal de fonction (FsI ; FsII) est utilisé pour influencer des dispositifs du moteur à combustion (1), tels par exemple le papillon, la pompe d'injection ou le variateur d'avance à l'allumage.

5. Commande de soupapes selon l'une ou plusieurs des revendications ci-avant, **caractérisée en ce que** les vibrations en torsion sont engendrées par un transmetteur Hall (16), un transmetteur à induction ou un transmetteur optique, affecté de préférence à l'arbre à cames (arbre à cames d'admission 11).
